# EUROPEAN PATENT SPECIFICATION

(11) **EP 3 513 683 B1**
(45) Date of publication and mention of the grant of the patent: **05.08.2020**
(21) Application number: 19151757.2
(22) Date of filing: 15.01.2019
(51) Int. Cl.: A47B 91/00, A47B 96/14, A47B 47/00, F16B 12/50

(54) **MODULAR SYSTEM FOR RETAIL DISPLAY COMPRISING FOOT/ADAPTER**
MODULARES AUSLAGENSYSTEM MIT FUSS / ADAPTER
SYSTEME MODULAIRE D'ÉTALAGE AVEC PIED / ADAPTATEUR

(30) Priority: 17.01.2018 IT 201800001128
(43) Date of publication of application: 24.07.2019
(73) Proprietor: CEFLA S.C., 40026 Imola (IT)
(72) Inventor: Passanti, Andrea, 40026 Imola (IT)
(74) Representative: Del Nero, Susanna

(56) References cited:
- WO-A1-01/77573
- US-A- 4 693 383

## Description

The present invention relates to the technical field of furniture for large retail stores, and in particular to a modular system which can be assembled and disassembled to build sale displays (shelving, gondola shelving, tables, containers, etc.). More particularly, the invention relates to an accessory which can work as foot and/or adapter for the upright of said modular system.

Such modular systems are well known in the art; nonetheless, the basic components of most of them must be soldered, or fixed through the use of joints, made of plastics or aluminium.

The same basic components (upright, crosspiece, stringer) can be provided in a limited number to build different kinds of final objects like shelving, gondola shelving, tables, containers, etc. Nonetheless, once the basic components were soldered to build e.g. a gondola shelving, the finished gondola shelving cannot be disassembled anymore. The main advantage of the soldered systems is their stability, which is maximal, while their main drawback is the impossibility of assembling and disassembling their basic components. They totally lack flexibility.

E.g., DE29914238U of Tegometall describes a modular system making use of joints for the joining of components.

US4693383 in the name of Joyce International INC. describes an adapter for uprights, said elements making part of a modular system, said adapter being provided with a polygonal transversal square section and with an upper portion and a lower portion, wherein said upper portion is an engaging end to be inserted in a hollow end of an upright, while the lower portion is provided with at least one central groove.

WO0177573 of Profilgruppen AB and DE202015008449 of FPS Profile UG, too, describe modular systems comprising at least an upright and at least an adapter foot engaging in a hollow end of an upright.

Modular systems with joints tend to be fairly stable. Nonetheless, a drawback of the modular systems making use of joints is linked to the production of different kinds of joints, e.g. end and intermediate joints, angle joints, two-way joints, three-way joints. This leads to a rise in the number and variety of the components which must be manufactured and stored, which is a drawback for both manufacturers and points of sale.

A modular system comprising three different kinds of basic components (upright, crosspiece, stringer), which can be easily assembled and disassembled with the simple use of a hammer, comprises an upright element made of a section bar having a square transversal section, and pairs of slots placed at a regular distance to each other along the longitudinal axis of said upright element; said pair of slots being present on one side of said upright or on two opposed sides of said upright.

The three basic components comprise a crosspiece element and a stringer element, and are provided in combination with reciprocal hooking members; in an assembled condition, each of said components is aligned parallel to one direction of three perpendicular directions, while:
- The upright element is provided at least on one of its sides with a row of slots pairs equidistant to each other, said side being parallel to the longitudinal axis of at least one stringer;
- Said stringer is provided at each end with a wing with the longitudinal axis of the wing oriented perpendicularly to the longitudinal axis of the stringer itself, which wing extends parallel to the axis of said upright, in the coupled condition, and is provided with at least two hooks aligned to each other in a direction parallel to the slot rows on said upright and engaging at least two slots of at least one row of slots;
- Said hooks and said slots are distanced respectively from the top side of said upright and from the top side of said stringer, so that the top side of the stringer is co-planar with the top side of said upright or to a plan parallel to said top side of said upright in assembled condition; and
- When assembled to said upright, said crosspiece extends with its longitudinal axis perpendicular to the upright side provided with slot rows;
- Said crosspiece has at its ends two extensions which extend parallel to said slot rows or to the longitudinal axis of said upright;
- Each extension bears at least two pairs of teeth aligned in the direction of a row of slots and coinciding at least with two slots of one slot rows;
- Said teeth being distanced from the top side of said crosspiece so that the top side of said crosspiece is co-planar with the top side of the upright in coupled condition and co-planar to the top side of the stringer and of the upright, or co-planar to the top plane of the stringer.

The assembling of the components of the modular system comprises the following steps:
a. Assembling of a crosspiece on an upright inserting a crosspiece in an upright so that all the pairs of teeth sit into place, with their respective slit leaning on the lower portion of the slot pairs; said assembling being performed using a hammer, so that each protrusion fits in in the same slot occupied by an end tooth;
b. Assembling a stringer on the assembly upright-crosspiece fitting in the stringer on the assembly upright-crosspiece, inserting two hooks of the stringer in the free portion of two slots and one hook in the intermediate free slot; once the stringer sits into place on the upright, said stringer is hammered down so that the peduncle of each hook sits into place on the lower portion of the slots.

According to a feature of the specific modular system, the extension of the crosspiece is provided with at least two pairs of teeth forming two rows of hooks which are parallel to each other, each coinciding with the slots of one of the two rows, so that the coupling between upright and crosspiece occurs engaging at least two slots of each row, while the hooks of the stringer engage, flanking the teeth of the stringer, at least some of the slots of a row wherein the teeth of the crosspiece are engaged.

According to an embodiment, each extension of said crosspiece is provided with three pairs of teeth, which teeth are placed on two parallel rows, each coinciding with a row of slots, which are parallel, too.

According to a further embodiment, each wing of said stringer is provided with three hooks placed on one row, coinciding with a row of slots.

A further embodiment provides that the crosspieces that are meant to engage the lower portion of the upright are the same as those for the upper portion of the upright, wherein their extensions are oriented in the opposed direction with respect to the crosspieces meant for the upper portion of the upright.

According to a further embodiment, the same kind of stringer is used for the coupling to the upper or lower portion of the uprights, the stringer being overturned in order to assemble it to the upper or lower portion of the uprights.

An improvement provides that for the assembling of structures, e.g. retail display structures, said crosspiece is provided with a U-shape comprising a tubular section bar connecting two extensions which are the U-arms; the upper connection crosspiece having a downward U-shape and the lower connection crosspiece an upward U-shape; said extensions having three pair of L-shaped teeth with a downward slit on the internal side of said L for fitting in said slots of upright; said teeth protruding from said stringer in the direction of the longitudinal axis of said stringer; said extension having a protrusion in order to stabilize the removable fitting in between stringer and upright.

In an embodiment, said stringer is provided with a U-shape comprising a tubular section bar linking two wings constituting the arms of said U; wings and tubular section bar being connected through the presence of a gusset having a rib with a development having a portion parallel to said tubular section bar, a portion perpendicular to said tubular section bar, and a portion connecting the two said portions; said stringer having three hooks with an isosceles trapezium shape, wherein the larger base of the isosceles trapezium is connected through a peduncle having dimensions smaller than said larger base; said hooks being oriented perpendicularly with respect to the longitudinal axis of the tubular section bar, and protruding below it on the side of said gusset opposed to the rib.

A further feature provides that each pair of teeth of the crosspiece fits in a corresponding pair of slots, two pair of teeth being distanced so that a pair of slots remains free in the assembled condition, while the hooks of said stringer fit in the free portion of at least two slots wherein a corresponding pair of the teeth of said crosspiece is engaged, and in the slot which remained free.

In particular, the aim of the present invention is limiting the number of versions of uprights to be produced in order to obtain the maximal versatility of said modular system. More particularly, the present invention allows to use the same uprights leaning the lower portion of the above-described modular system directly to the ground, even leaning the lower portion to a pre-existing base for shelving.

Aim of the present invention is providing an accessory working as a foot/adapter for said modular system, allowing to use always the same uprights for all the sundry objects (gondola shelving, shelving, tables, containers, etc.) which can be obtained assembling said three basic components.

In order to obtain the possibility to use the uprights of said system in combination with different and more traditional shelving system, like the one described e.g. in EP2807958B1 of the same applicant, the solution consists in a foot/adapter leaning with its lower portion on said base, while its upper portion is inserted into said upright, so that the two objects are integral, allowing the unloading of the weight from the upright to the adapter to the base. Moreover, said foot/adapter allows to limit the number of uprights of different kind to be produced.

This object is achieved by an apparatus and a method having the features of the independent claims. Advantageous embodiments and refinements are specified in claims dependent thereon.

In particular, the invention is meant to be provided in combination with a modular system like the above-described, the assembly occurring with the use of a simple hammer, and which can be combined with a traditional shelving, like the one described e.g. in EP2807958B1 of the same applicant, for its integration and/or modification.

The first advantage of the present invention is the optimization of the number of upright versions to be produced.

The second advantage of the present invention is an improved distribution of weights on said base.

A third advantage comes from the fact that said foot/adapter has no direction, so making its assembling easier.

Further advantages and properties of the present invention are disclosed in the following description, in which exemplary embodiments of the present invention are explained in detail based on the drawings:
- Figure 1: Axonometric view of a shelving assembled using the foot/adapter according to the present invention;
- Figure 2: Axonometric view of an enlarged detail of Figure 1;
- Figure 3: Axonometric view of the foot/adapter according to the present invention;
- Figure 4: Exploded axonometric view of the foot/adapter assembled with its specific seat in the base;
- Figure 5: Axonometric view from outside of the three basic components (upright, crosspiece and stringer) of the display modular system assembled in a finished object;
- Figure 6: Axonometric view from inside of the three basic components (upright, crosspiece and stringer) of the display modular system assembled in a finished object;
- Figure 7: Axonometric view of two uprights of different kind;
- Figure 8: Axonometric view of two crosspieces, the first for upper connection, the second for lower connection;
- Figure 9: Axonometric view of a stringer.

It is worthwhile pointing out that the three basic components of the display modular system to be combined with a shelving having a more traditional structure or assembling are: upright 1, crosspiece 2 and stringer 3.

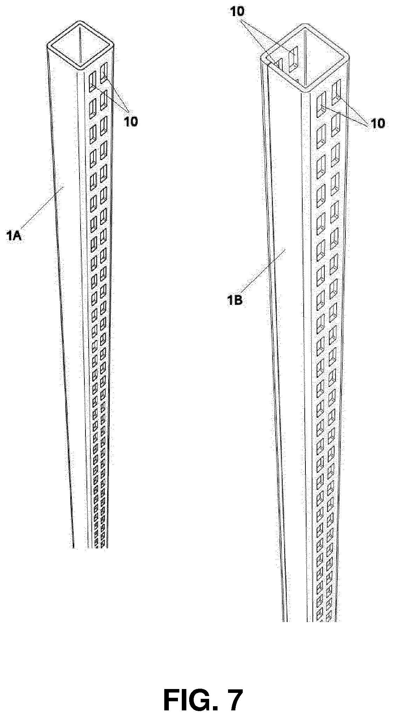

The uprights 1 are provided in two versions: one-side slotted 1A, bearing pairs of regularly distanced slots on one side only of the square section of said upright, and two-side slotted uprights 1B, bearing pairs of slots regularly spaced on the two opposed sides of the square section of the upright (see Figure 7). The following description makes reference to the use of the foot/adapter in combination with a two-side slotted upright 1B without for this losing generality, in that the dimensions at play allow the use of the foot/adapter 101 even in combination with a one-side slotted upright 1A.

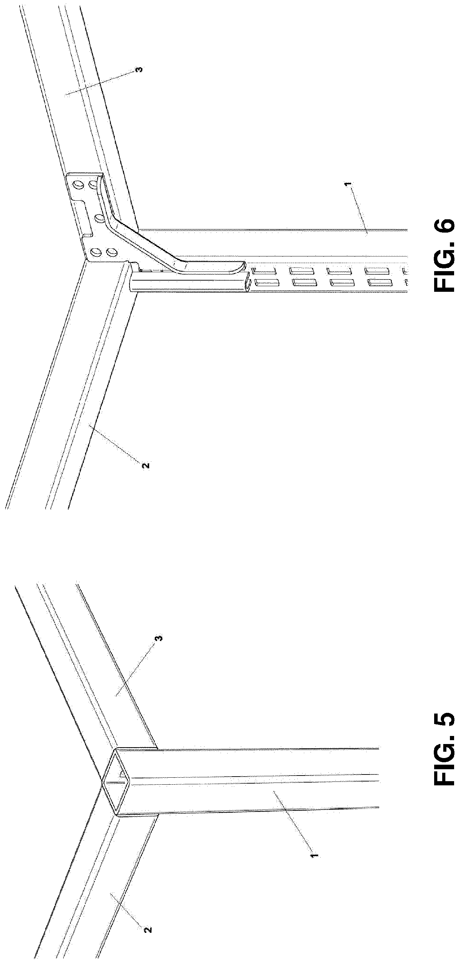

The Figures 5 to 9 show the display modular system for the display of goods, and are described in detail in that, although they do not form part of the present invention, allow to better describe the modularity and the function of the system, and the coupling of the foot/adapter 101 according to the present invention.

Figure 5 shows an axonometric view from outside the corner of the assembled three basic components: upright 1, crosspiece 2 and stringer 3, as assembled in a finished object. Already from this Figure one can appreciate that the three components assembled in in the finished object define a plane (upper connection).

Figure 6 shows an axonometric view from inside the corner of the assembled three basic components: upright 1, crosspiece 2 and stringer 3, as assembled in a finished object. In the preferred embodiment, upright 1, tubular section bar 24 of crosspiece 2 and tubular section bar 34 of stringer 3 have the same square transversal section.

Figure 7 shows an upright 1A and an upright 1B having pairs of slots placed at regular intervals. Uprights 1 have a square transversal section wherein the pairs of slots 10 are provided on one side only (one-side slotted upright, 1A), or on two opposed sides (two-side slotted upright, 1B).

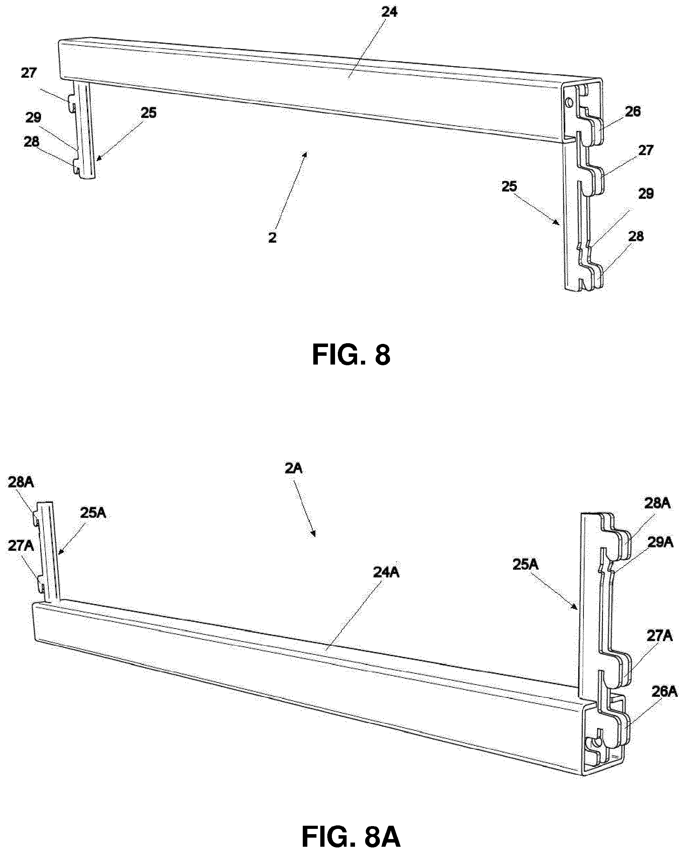

Figure 8 shows a crosspiece 2 allowing to obtain an upward plane among upright, crosspiece and stringer, (upper connection), which overall has an upside down U shape, with downward oriented arms of the U. Said crosspiece 2 has a tubular section bar 24 connecting the two U arms; at its ends there are provided two symmetrical extensions (U arms) provided with three pairs of teeth, a first pair of teeth 26 adjacent to said tubular section bar 24, an intermediate pair 27, and a terminal pair 28. Figure 8A shows a crosspiece 2A allowing to obtain a plane among crosspiece and stringer oriented downward (lower connection), which has overall a U shape. The difference between upper connection crosspiece 2 and lower connection crosspiece 2A is that the extensions 25 A have their three pairs of teeth always oriented downward, but said extensions 25 A are translated upward. The three pairs of teeth 26, 27, 28 are placed at a distance from each other such as to allow their fitting in into the slots of uprights 1A or 1B. It is worthwhile noting that the pair of teeth 26 and 27 have a distance allowing their fitting in two adjacent slots, while the pair of teeth 28 is placed so as to allow the fitting in while skipping the pair of slots immediately under the one allowing the fitting of the teeth pair 27. In the portion of extension 25, 25A, between the pair of teeth 27 and 28 or 27A and 28A which are farther from each other a small protrusion 29, 29A is placed, protruding from the border of the extension 25. Once the components are assembled, said protrusion 29, 29A fits in upright 1. The pairs of teeth 26, 26A; 27, 27A; 28, 28A have an L-shape and a slit oriented downward, which is long about half the overall dimension of the tooth. The pairs of teeth 26, 26A; 27, 27A; 28, 28A protrude from the two ends of crosspieces 2, 2A in the longitudinal direction of the crosspiece itself. Said extensions 25 are produced U-bending a portion of metal sheet and soldering said extensions inside said tubular section bar 24, so that nothing can be seen from outside.

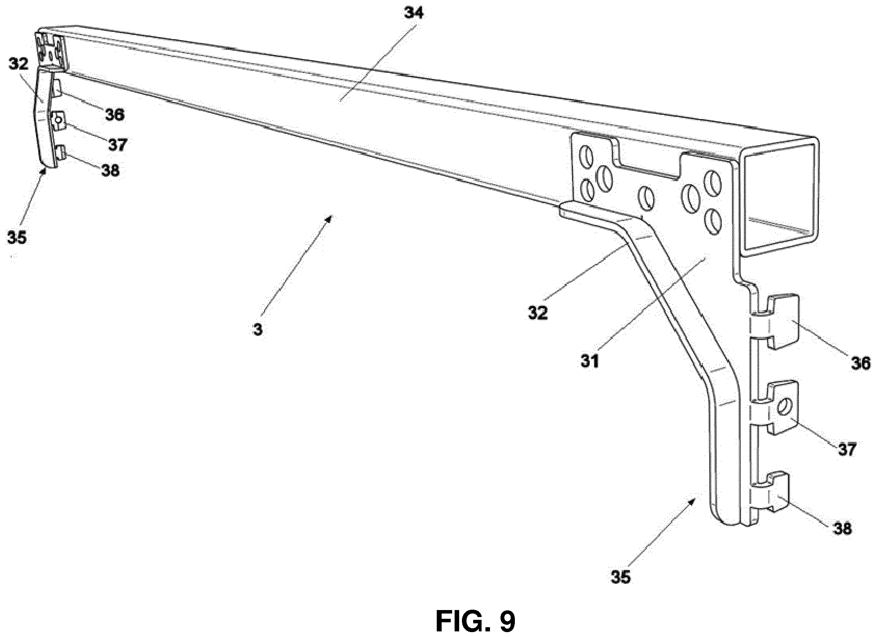

Figure 9 shows a stringer 3, having overall a U-shape, with the two arms of said U oriented downward. Said stringer 3 is provided with a tubular section bar 34, too, which is the portion connecting the two arms of the U. At the two ends of said tubular section bar there are provided two symmetrical extensions 35 (the two arms), provided with three hooks, one hook 36 of which is adjacent to said tubular section bar, an intermediate hook 37 and an end hook 38. Said hooks 36, 37, 38 are at a distance such that they can be fitted in three consecutive slots. Said teeth have an isosceles trapezium shape, with a peduncle thinner than the isosceles trapezium side connected to said extension 35. Said hooks 36, 37, 38 protrude from the two ends of stringer 3 oriented perpendicularly to the longitudinal axis of the stringer itself; all the hooks are oriented so as to lie on the same side of the tubular section bar 34. Wings 35, too, are produced by bending and soldering to tubular section bar 34 a substantially triangular portion of metal sheet. Once soldered, said wings 35 have each a gusset 31 that is responsible of the stability of assembled objects. Said gusset 31 has a rib protruding from the other side of said gusset 31 with respect to hooks 36, 37, 38. Said rib 32 has a portion which is parallel to said tubular section bar 34, a portion perpendicular to tubular section bar 34 and a portion placed at 45° connecting the two said portions. Overall, said rib 32 gives the system an improved rigidity, while the top portion of said rib, parallel to ground, provides a small surface which can support a panel having a payload up to 70 kg.

In order to combine an upright 1 of the display modular system according to the Figures 5 to 9, e.g. to integrate a shelving of a different type with elements of the said display modular system, said shelving 100 finally comprises two feet/adapters 101 according to the present invention, each of which is assembled on one of the said two-side slotted uprights 1B.

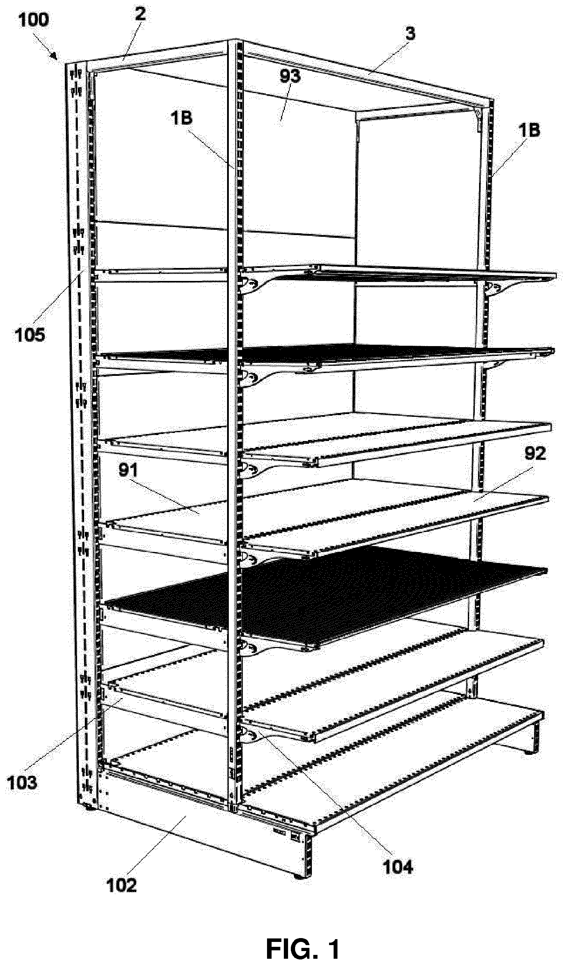

Figure 1 shows a wall shelving 100 comprising two two-side slotted uprights 105, two bases 102 like those described in EP2807958B1 of the same applicant, any number of shelf 91, 92 supported by pairs of posterior brackets 103 and anterior brackets 104, and back-panels 93. Moreover, the shelving 100 comprises two two-side slotted upright 1B, two crosspieces 2 and a stringer 3 making part of the modular display system.

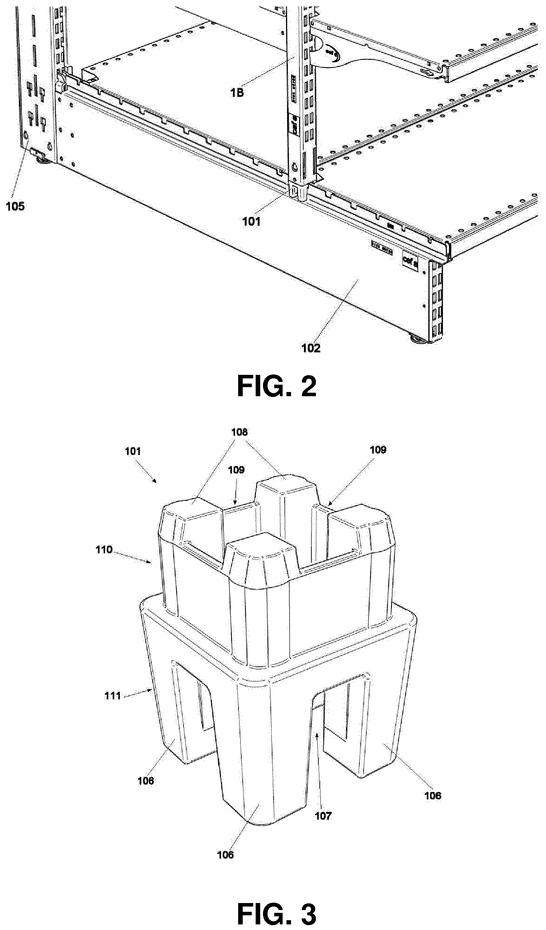

Figure 2 shows a detail of the foot/adapter 101 assembled on the two-side slotted 1B and on the base 102, which better allows to appreciate their relations.

The foot/adapter 101 is removably fitted in the two-side slotted upright 1B. The assembly adapter-upright leans on four feet 106 of the foot/adapter on the body of the base 102, and in its turn, through grooves 107 provided in the four walls of the foot/adapter 101, is inserted, in a preferred embodiment, in the specific arrangements 114 of said base, so as to allow the assembling of the dedicated accessories like shelves 103 and 104 to complete the configuration of the system.

It is worthwhile noting that the foot/adapter 101 integrally fits in the upright 1B, while only leans on the base 102, as the weights at play keep it steady.

Figure 3 shows an axonometric view of the foot/adapter 101 according to the present invention. It has a square or polygonal transversal section according to the transversal section of the tubular section bar forming the upright 1A or 1B. Moreover, the foot/adapter 101 has two portions, one upper portion 110 and a lower portion 111, apparently separated by a step, the lower portion having a bigger dimension with respect to the upper portion, in particular a bigger transversal section. The lower portion 111 has a transversal section with a polygonal shape and with the same dimensions of the external section of the one-side slotted 1A or two-side slotted 1B upright, so as to become its natural extension (see Figure 2), once the foot/adapter 101 is assembled with the one-side slotted 1A or two-side slotted 1B upright. The upper portion 110 has a shape and a section of its transversal section substantially corresponding with the internal transversal section of the tubular section bar forming the upright, within the respective tolerances, or of a spigot joint provided at its head end, the shape and dimensions being such as to allow the integral interlocking of the portion 110 of the foot/adapter with the internal space of the upright or of the terminal spigot.

At the four angles of the lower portion 111 there are provided four downward foot 106, each separated from the other by grooves 107. The height of the grooves 107 is such as to allow the leaning of said feet 106 on the upper portion of base 102 without interference with the straps 112 of the base itself. With reference to the illustrated embodiment, the grooves form two diametric notches crossing each other.

The height of the lower portion 111, i.e. of the grooves 107 between the feet 106 is the same as that of the straps 112 of base 102, so as to allow the use of the same upright 1A or 1B used in other cases, thanks to the fact that the base 102 is provided with a bigger thickness than the strap 112, and that the said lower portion is placed across said strap 112 placing said four feet on the upper side of base 102, two on one side of said strap 112 and the other two on the opposed side of said strap 112.

The upper portion 110 is provided with a square section with four protrusions 108 protruding upward, each separated by four grooves 109, less deep than the grooves 107 in the lower portion 111.

It is worthwhile noting that the foot/adapter 101 is a perfectly symmetrical object with respect to its longitudinal axis, while the upright 1B has a direction of assembly given by the position of the slots on its opposed sides. The symmetry of the foot/adapter 101 facilitates the assembling of the assembly upright-foot/adapter in that the human fitter does not need to observe the direction of the foot/adapter, but said foot/adapter can be coupled to the base 102 in any rotation position with steps of 90° with respect to the longitudinal axis of the upright. Once the foot/adapter 101 is assembled with the upright 1, the upright can be rotated in the needed orientation of the slotted side, without compromising the matching between foot/adapter 101 and base 102.

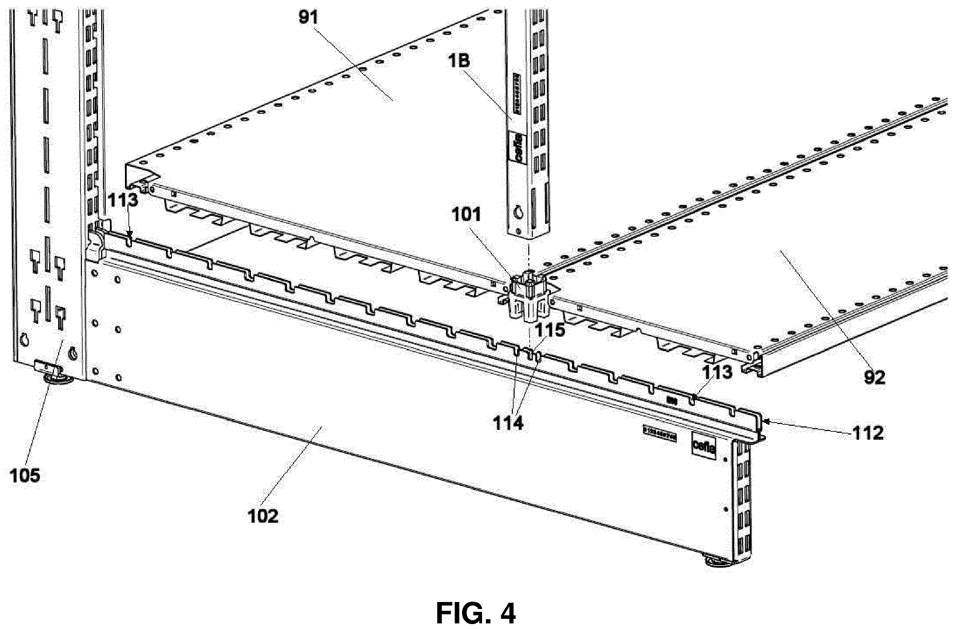

Figure 4 shows an exploded view allowing to clarify the assembling and the reciprocal relations among base 102, upright 1B and foot/adapter 101.

The upper portion of the base 102 is overall called strap 112. Said strap 112 is provided with a plurality of upward slits 113. Said slits are different from each other, having the same depth, but two distinct width, 6 and 11 mm. Said different widths have the aim of facilitating the assembly of shelves 91, 92 of different dimensions directly on the base 102.

According to a further feature, said foot/adapter 101, and in particular its portion 111, is tubular or is provided in its central area with an axial recess coinciding with the crossing area of grooves 107 separating the feet 106. This arrangement allows to further improve the coupling between base 102 and foot/adapter 101, thanks to the presence on said strap of two slits 114 of identical dimension, engaging the segments of material of portion 111 between the feet, and delimiting the axial recess allowing the leaning of the foot/adapter in a pre-defined position, fixed with respect to the length of the base 102. In this way, the foot/adapter 101, i.e. its portion 111, is engaged in said slits 114. In particular, the vertical dimension of the slits is such so that the portion 111 is engaged, and the stroke of engagement allows to close the gap in height between said grooves 107 and the height of the lower portion 111.

Said slits 114 are positioned at a distance such as to be slightly lower than the internal dimension of the foot/adapter 101 so as to easily allow its insertion. The presence of a slit 115 intermediate to said slits 114 is not influential on the assembly of the foot/adapter, but is useful for assembling a further one-piece plane taking the same position of the planes 91 and 92.

The method of assembly according to the present invention comprises the following steps:
a. Assembling a couple of bases 102 on a couple of uprights 105;
b. Inserting back panels 93 to form a self-supporting three-dimensional structure;
c. Inserting the portion 110 of a foot/adapter 101 inside the end of an upright 1 so as to make them integral, with the help of a hammer;
d. Leaning the assembly foot/adapter 101-upright 1, in particular the portion 111, in the specific slits 114 on the straps 112 of the base 102;
e. Inserting the desired number of shelves 103 in the suitable slots of the uprights 105 and 1B.

It is hardly necessary to mention that said assembly can be disassembled in its basic components, which can all be re-used to build other combinations.

Finally, it is worthwhile noting that, in the preferred embodiment, the foot/adapter 101 is made of a magnesium alloy, preferably AM50 (EN-McMgA15Mn EN-MC21220 AM 50), having the advantage of being very light and nonetheless shock-resistant. In contrast to plastics, the magnesium alloy distorts but does not break.
- 1A: one-side slotted upright
- 1B: two-side slotted upright
- 2: upper connection crosspiece
- 2A: lower connection crosspiece
- 3: stringer
- 10: slot
- 24: tubular section bar
- 25: extension
- 26: tooth adjacent to tubular section bar
- 27: intermediate tooth
- 28: end tooth
- 29: protrusion
- 31: gusset
- 32: rib
- 34: tubular section bar
- 35: wings
- 36: hook adjacent to tubular section bar
- 37: intermediate hook
- 38: end hook
- 91: shelf
- 92: shelf
- 93: back panel
- 100: wall shelving
- 101: foot/adapter
- 102: base
- 103: posterior shelf
- 104: anterior shelf
- 105: upright
- 106: foot
- 107: groove
- 108: protrusion
- 109: groove
- 110: upper portion
- 111: lower portion
- 112: strap
- 113: slit
- 114: slit
- 115: slit

## Claims

1. Modular system comprising at least an upright (1), a foot/adapter (101) for said upright (1) and a base (102), wherein:
- said base comprises a section bar with a pre-set length and pre-set width, and a longitudinal strap (112), protruding from the top side of said section bar in a central position with respect to the width of said section bar, said strap being provided with slits (114) engaging the delimiting walls of an axial recess of the lower portion of said foot/adapter or of the internal lumen of the tubular section of said foot/adapter;
- said foot/adapter (101) being provided with a polygonal transversal section, preferably a square section, comprising:
- an upper portion (110);
- a lower portion (111);
said upper portion (110) being an engaging end to be inserted in a hollow end of an upright (1) for coupling to said base (102), while the lower portion (111) forms the foot leaning on said base (102), said foot/adapter (101) being provided with at least one central groove (107) for engaging said strap (112), and for leaning on said base (102) across said strap (112);
the height of the grooves (107) of said foot/adapter (101) allowing to house the strap (112) of said base (102), the height of the lower portion (111) being the same of the straps (112) of said base, while the vertical dimension of said slits (114) allows to close the gap in height between said grooves (107) and the height of the lower portion (111);
**characterized in that**
the upper portion (110) of said foot/adapter (101) comprises four protrusions (108) placed at its four angles, separated from each other by four grooves (109); its transversal dimension allowing the fitting in of said upper portion (110) inside said upright (1), having a sectional shape and dimension corresponding to the shape and dimension of the lumen of said tubular upright (1) or of an axial end recess of said upright (1).

2. Modular system according to claim 1, wherein the upper portion of said foot/adapter (101) is provided with a transversal section smaller than said lower portion (111); said upper portion (110) fitting in integrally with the terminal axial end of said upright (1), while said lower portion (111) leans on the base (102).

3. Modular system according to one or more of the preceding claims, wherein the lower portion (111) of said foot/adapter (101) comprises four feet (106) placed at its four angles, separated from each other by four respective grooves (107); the transversal dimension of said lower portion being the same as the external dimension of upright (1), so that said lower portion (111) becomes the natural extension of said upright (1).

4. Modular system according to one or more of the preceding claims, wherein in said strap (112) of said base (102) there are provided suitable slits (114) allowing to fix the precise mounting point of said foot/adapter with respect to the total length of said strap (112).

5. Modular system according to one or more of the preceding claims, wherein said foot/adapter (101) is made of a magnesium alloy.

6. Method for the assembling of the modular system according to claims 1 to 5, comprising the following steps:
a. Assembling a couple of bases (102) on a couple of uprights (105);
b. Inserting back panels (93) to form a self-supporting three-dimensional structure;
c. Inserting the portion (110) of a foot/adapter (101) inside the end of an upright (1) so as to make them integral, with the help of a hammer;
d. Leaning the assembly foot/adapter (101)-upright (1), in particular the portion (111), on the specific slits (114) on the straps (112) of the base (102);
e. Inserting the desired number of shelves (103) in the suitable slots of the uprights (105) and (1B).

7. Method for the assembling of the foot/adapter (101) according to claim 6, wherein the assembling of said foot/adapter (101) can occur in one specific point only of said strap (112) of said base (102), thanks to the presence of assembling slits (114).

## Patentansprüche

1. Modulares System, umfassend mindestens einen Pfosten (1), einen Fuß/Adapter (101) für den Pfosten (1) und eine Basis (102), wobei:
- die Basis eine Abschnittsstange mit einer voreingestellten Länge und voreingestellten Breite und einen Längsriemen (112) umfasst, der von der Oberseite der Abschnittsstange in einer zentralen Position in Bezug auf die Breite der Abschnittsstange vorsteht, wobei der Riemen mit Schlitzen (114) versehen ist, die in die Begrenzungswände einer axialen Aussparung des unteren Teils des Fußes/Adapters oder des inneren Lumens des röhrenförmigen Abschnitts des Fußes/Adapters eingreifen;
- wobei der Fuß/Adapter (101) mit einem polygonalen Querschnitt, vorzugsweise einem quadratischen Querschnitt, versehen ist, umfassend:
- einen oberen Teil (110);
- einen unteren Teil (111);
wobei der obere Teil (110) ein Eingriffsende ist, das in ein hohles Ende eines Pfostens (1) zum Koppeln mit der Basis (102) eingeführt werden soll, während der untere Teil (111) den Fuß bildet, der sich auf die Basis (102) stützt, wobei der Fuß/Adapter (101) mit mindestens einer zentralen Nut (107) versehen ist, um den Riemen (112) in Eingriff zu bringen und sich über den Riemen (112) auf die Basis (102) zu stützen;
wobei die Höhe der Nuten (107) des Fußes/Adapters (101) die Aufnahme des Riemens (112) der Basis (102) ermöglicht, wobei die Höhe des unteren Teils (111) der der Riemen (112) der Basis entspricht, während es die vertikale Abmessung der Schlitze (114) ermöglicht, den Höhenspalt zwischen den Nuten (107) und der Höhe des unteren Teils (111) zu schließen;
**dadurch gekennzeichnet, dass** der obere Teil (110) des Fußes/Adapters (101) vier Vorsprünge (108) umfasst, die in seinen vier Winkeln angeordnet sind und durch vier Nuten (109) voneinander getrennt sind;
wobei seine Querabmessung das Einpassen des oberen Teils (110) in den Pfosten (1) ermöglicht, der eine Querschnittsform und -abmessung aufweist, die der Form und Abmessung des Lumens des röhrenförmigen Pfostens (1) oder einer axialen Endaussparung des Pfostens (1) entspricht.

2. Modulares System nach Anspruch 1, wobei der obere Teil des Fußes/Adapters (101) mit einem Querschnitt versehen ist, der kleiner als der untere Teil (111) ist;
wobei der obere Teil (110) fest einbaubar mit dem abschließenden axialen Ende des Pfostens (1) zusammenpasst, während sich der untere Teil (111) auf die Basis (102) stützt.

3. Modulares System nach einem oder mehreren der vorhergehenden Ansprüche, wobei der untere Teil (111) des Fußes/Adapters (101) vier Füße (106) umfasst, die in seinen vier Winkeln angeordnet sind und durch vier jeweilige Nuten (107) voneinander getrennt sind;
wobei die Querabmessung des unteren Teils dieselbe ist wie die äußere Abmessung des Pfostens (1), so dass der untere Teil (111) zur natürlichen Verlängerung des Pfostens (1) wird.

4. Modulares System nach einem oder mehreren der vorhergehenden Ansprüche, wobei in dem Riemen (112) der Basis (102) geeignete Schlitze (114) vorgesehen sind, die es ermöglichen, den genauen Befestigungspunkt des Fußes/Adapters in Bezug auf die Gesamtlänge des Riemens (112) zu fixieren.

5. Modulares System nach einem oder mehreren der vorhergehenden Ansprüche, wobei der Fuß/Adapter (101) aus einer Magnesiumlegierung besteht.

6. Verfahren zum Zusammenbau des modularen Systems nach den Ansprüchen 1 bis 5, umfassend die folgenden Schritte:
a. Zusammenbau einiger Basen (102) auf einigen Pfosten (105);
b. Einsetzen von Rückwänden (93) zur Bildung einer selbsttragenden dreidimensionalen Struktur;
c. Einsetzen des Teils (110) eines Fußes/Adapters (101) in das Ende eines Pfostens (1), um sie mit Hilfe eines Hammers fest einzubauen;
d. Stützen des Aufbaus aus Fuß/Adapter (101) und Pfosten (1), insbesondere des Teils (111), auf die spezifischen Schlitze (114) an den Riemen (112) der Basis (102) ;
e. Einsetzen der gewünschten Anzahl von Regalen (103) in die geeigneten Schlitze der Pfosten (105) und (1B).

7. Verfahren zum Zusammenbau des Fußes/Adapters (101) nach Anspruch 6, wobei das Zusammenbauen des Fußes/Adapters (101) durch das Vorhandensein von Montageschlitzen (114) nur an einem bestimmten Punkt des Riemens (112) der Basis (102) erfolgen kann.

## Revendications

1. Système modulaire comprenant au moins un montant (1), un pied/adaptateur (101) pour ledit montant (1) et une base (102), dans lequel :
- ladite base comprend une barre de section ayant une longueur prédéfinie et une largeur prédéfinie, et une bande longitudinale (112) faisant saillie depuis le côté supérieur de ladite barre de section dans une position centrale par rapport à la largeur de ladite barre de section, ladite bande étant pourvue de fentes (114) en prise avec les parois de délimitation d'un évidement axial de la partie inférieure dudit pied/adaptateur ou de la lumière interne de la section tubulaire dudit pied/adaptateur ;
- ledit pied/adaptateur (101) étant pourvu d'une section transversale polygonale, de préférence une section carrée, comprenant :
- une partie supérieure (110) ;
- une partie inférieure (111) ;
ladite partie supérieure (110) étant une extrémité de prise à insérer dans une extrémité creuse d'un montant (1) pour s'accoupler à ladite base (102), alors que la partie inférieure (111) forme le pied s'appuyant sur ladite base (102), ledit pied/adaptateur (101) étant pourvu d'au moins une rainure centrale (107) destinée à venir en prise avec ladite bande (112) et à s'appuyer sur ladite base (102) de part et d'autre de ladite bande (112) ; la hauteur des rainures (107) dudit pied/adaptateur (101) permettant de loger la bande (112) de ladite base (102), la hauteur de la partie inférieure (111) étant la même que des bandes (112) de ladite base, alors que la dimension verticale desdites fentes (114) permet de fermer l'écart en hauteur entre lesdites rainures (107) et la hauteur de la partie inférieure (111) ;
**caractérisé en ce que**
la partie supérieure (110) dudit pied/adaptateur (101) comprend quatre saillies (108) placées à ses quatre angles, séparées les unes des autres par quatre rainures (109) ; sa dimension transversale permettant l'emboîtement de ladite partie supérieure (110) à l'intérieur dudit montant (1), ayant une forme et dimension en coupe correspondant à la forme et dimension de la lumière dudit montant tubulaire (1) ou d'un évidement d'extrémité axiale dudit montant (1).

2. Système modulaire selon la revendication 1, dans lequel la partie supérieure dudit pied/adaptateur (101) est pourvue d'une section transversale plus petite que ladite partie inférieure (111) ; ladite partie supérieure (110) s'emboîtant intégralement avec l'extrémité axiale terminale dudit montant (1), alors que ladite partie inférieure (111) s'appuie sur la base (102).

3. Système modulaire selon une ou plusieurs des revendications précédentes, dans lequel la partie inférieure (111) dudit pied/adaptateur (101) comprend quatre pieds (106) placés à ses quatre angles, séparés les uns des autres par quatre rainures respectives (107) ; la dimension transversale de ladite partie inférieure étant identique à la dimension externe du montant (1), de telle sorte que ladite partie inférieure (111) devient le prolongement naturel dudit montant (1).

4. Système modulaire selon une ou plusieurs des revendications précédentes, dans lequel dans ladite bande (112) de ladite base (102) sont prévues des fentes appropriées (114) permettant de fixer le point de montage précis dudit pied/adaptateur par rapport à la longueur totale de ladite bande (112).

5. Système modulaire selon une ou plusieurs des revendications précédentes, dans lequel ledit pied/adaptateur (101) est fait d'un alliage de magnésium.

6. Procédé d'assemblage du système modulaire selon les revendications 1 à 5, comprenant les étapes suivantes :
a. l'assemblage d'un couple de bases (102) sur un couple de montants (105) ;
b. l'insertion de panneaux arrière (93) pour former une structure tridimensionnelle autoportante ;
c. l'insertion de la partie (110) d'un pied/adaptateur (101) à l'intérieur de l'extrémité d'un montant (1) de manière à les rendre solidaires, à l'aide d'un marteau ;
d. l'appui du pied d'assemblage/adaptateur (101) - montant (1), en particulier la partie (111), sur les fentes spécifiques (114) sur les bandes (112) de la base (102) ;
e. l'insertion du nombre souhaité d'étagères (103) dans les encoches appropriées des montants (105) et (1B).

7. Procédé d'assemblage du pied/adaptateur (101) selon la revendication 6, dans lequel l'assemblage dudit pied/adaptateur (101) peut se produire seulement en un point spécifique de ladite bande (112) de ladite base (102), grâce à la présence de fentes d'assemblage (114).
